# EUROPEAN PATENT APPLICATION

(11) **EP 4 518 428 A1**
(43) Date of publication of application: **05.03.2025**
(21) Application number: 22939416.8
(22) Date of filing: 29.04.2022
(51) Int. Cl.: H04W 36/00

(54) **CELL STATE CONFIGURATION METHOD AND APPARATUS THEREOF**

(71) Applicant: Beijing Xiaomi Mobile Software Co., Ltd., Beijing 100085 (CN)
(72) Inventor: WU, Yumin, Beijing 100085 (CN); XIONG, Yi, Beijing 100085 (CN)
(74) Representative: König, Andreas Rudolf
(86) International application number: PCT/CN2022/090786
(87) International publication number: WO 2023/206572

(57) **Abstract**

Disclosed in embodiments of the present application are a cell state configuration method and an apparatus thereof, which can be applied to communication systems such as a long-term evolution (LTE) system, a 5th generation (5G) mobile communication system, a 5G new radio (NR) system, or other future novel mobile communication systems. The method comprises: receiving a configuration message of a network side device, and determining a candidate cell or a candidate cell group according to the configuration message, and receiving an indication message of the network side device, and determining an activation state and/or type of the candidate cell or the candidate cell group according to the indication message. By implementing the embodiments of the present application, the candidate cell or the candidate cell group can be determined according to the configuration message, and the candidate cell or the candidate cell group is determined according to the indication message. The flexibility of the configuration of the cell or the cell group can be improved by means of this mode.

## Description

### TECHNICAL FIELD

The disclosure relates to the field of communication technologies, in particular to a method and an apparatus for configuring a cell state.

### BACKGROUND

In a wireless communication, a network device may provide cells or cell groups configured in advance for a terminal to select a cell group or a cell, and then the network device may configure the cell or the cell group by a control signaling. However, presently, there is a lack of an effective means for dynamically determining configuration for the cell or the cell group.

### SUMMARY

Embodiments of the disclosure provide a method and an apparatus for configuring a cell state, which may be performed by a communication system such as a long term evolution (LTE) system, a fifth generation (5G) mobile communication system, a 5G new radio (NR) system, or other future new mobile communication systems. An activation state and/or a type of a candidate cell, or an activation state and/or a type of a candidate cell group are determined based on configuration information and indication information sent by a network device, thus improving a flexibility of the configuration for the cell or the cell group.

In a first aspect, an embodiment of the disclosure provides a method for configuring a cell state. The method includes:
receiving configuration information from a network device, and determining a candidate cell or a candidate cell group based on the configuration information; and
receiving indication information from the network device, and determining an activation state and/or a type of the candidate cell, or an activation state and/or a type of the candidate cell group based on the indication information.

By implementing embodiments of the disclosure, the candidate cell or the candidate cell group may be determined based on the configuration information, and the candidate cell or the candidate cell group may be determined based on the indication information. In this way, the flexibility of configuration for the cell or the cell group may be improved.

Alternatively, determining the candidate cell or the candidate cell group based on the configuration information of the network device includes:
obtaining a list of the candidate cell, and determining a candidate cell identification based on the list of the candidate cell; or
obtaining a list of the candidate cell group, and determining a candidate cell group identification based on the list of candidate cell group.

Alternatively, the indication information includes first format indication information. The first format indication information includes:
candidate cell group identification indication information; or
candidate cell group bit-pattern indication information, in which a bit in the candidate cell group bit-pattern indication information corresponds to the candidate cell group identification.

Alternatively, the indication information includes second format indication information. The second format indication information includes:
candidate cell identification indication information; or
candidate cell bit-pattern indication information, in which a bit in the candidate cell bit-pattern indication information corresponds to the candidate cell identification.

Alternatively, determining the activation state of the candidate cell or the activation state of the candidate cell group includes:
activating a target candidate cell group corresponding to the candidate cell group identification indication information, and determining a type of the target candidate cell group as a master cell group (MCG) or a secondary cell group (SCG); or
activating a target candidate cell group corresponding to the candidate cell group bit-pattern indication information, and determining a type of the target candidate cell group as an MCG or an SCG.

Alternatively, determining the activation state and/or the type of the candidate cell, or the activation state and/or the type of the candidate cell group based on the indication information also includes:
activating a target candidate cell corresponding to the candidate cell identification indication information, and determining a type of the candidate cell as a primary cell (PCell) or a primary secondary cell (PSCell); or
activating a target candidate cell corresponding to the candidate cell bit-pattern indication information, and determining a type of the candidate cell as a PCell or a PSCell.

Alternatively, determining the type of the candidate cell or the type of the candidate cell group includes:
in case that the configuration information includes a type suitable for the candidate cell or the candidate cell group, determining a type of the target candidate cell or a type of the target candidate cell group based on the configuration information; or
in case that the configuration information includes a type of a candidate cell activated or a type of a candidate cell group activated, determining a type of the target candidate cell or a type of the target candidate cell group based on the configuration information.

Alternatively, the method also includes:
in case that the indication information is received through an MCG, activating the target candidate cell group taken as the MCG according to the indication information, or, activating the target candidate cell taken as a PCell according to the indication information; or
in case that the indication information is received through a PCell, activating the target candidate cell taken as the PCell according to the indication information; or, activating the target candidate cell group taken as an MCG according to the indication information.

Alternatively, the method also includes:
in case that the indication information is received through a secondary cell group (SCG), activating the target candidate cell group taken as the SCG according to the indication information, or, activating the target candidate cell taken as a PSCell according to the indication information; or
in case that the indication information is received through a PSCell, activating the target candidate cell taken as the PSCell according to the indication information, or, activating the target candidate cell group taken as an SCG according to the indication information.

Alternatively, a number of an activated target candidate cell group taken as the MCG is 1, a number of an activated target candidate cell group taken as the SCG is 1, a number of an activated target candidate cell taken as the PCell is 1, and a number of an activated target candidate cell taken activated as the PSCell is 1.

Alternatively, the method also includes:
in case that a type of the target candidate cell group activated is a master cell group (MCG), setting an activated state of a candidate cell group with a current type being the MCG to a deactivated state;
in case that a type of the target candidate cell group activated is the MCG, setting an activated state of a candidate cell group with a current type being the SCG to a deactivated state;
in case that a type of the target candidate cell group activated is an SCG, setting an activated state of a candidate cell group with a current type being the SCG to a deactivated state;
in case that a type of the target candidate cell activated is a PCell, setting an activated state of a candidate cell group with a current type being the MCG to a deactivated state;
in case that a type of the target candidate cell activated is the PCell, setting an activated state of a candidate cell group with a current type being a PSCell to a deactivated state; or
in case that a type of the target candidate cell group activated is the PSCell, setting an activated state of a candidate cell group with a current type being the SCG to a deactivated state.

Alternatively, the method also includes:
setting an SCell corresponding to the candidate cell group in the deactivated state to be in the deactivated state or a sleep state.

Alternatively, the method also includes at least one of:
applying a configuration of a candidate cell group activated;
applying a configuration of the target candidate cell activated; or
applying a configuration of a candidate cell group corresponding to the target candidate cell activated.

Alternatively, the method also includes at least one of:
setting an SCell corresponding to the target candidate cell group activated to be in a deactivated state or a sleep state;
setting an activation state of an SCell in the target candidate cell group activated based on the configuration information;
setting an SCell in the candidate cell group corresponding to the target candidate cell activated to be in a deactivated state or a sleep state; or
setting an activation state of an SCell in the candidate cell group corresponding to the target candidate cell activated according to the configuration information.

Alternatively, the method also includes:
initiating a random access process to the target candidate cell activated or the target candidate cell group activated.

Alternatively, the method also includes:
in case that a type of the target candidate cell group activated is an MCG, a switching process being triggered;
in case that a type of the target candidate cell group activated is an SCG and a corresponding SCG or activated SCG does not present for the terminal currently, an SCG adding process being triggered; or
in case that a type of the target candidate cell group activated is an SCG and a corresponding SCG or an activated SCG currently presents for the terminal, an SCG change process being triggered.

Alternatively, the method also includes at least one of:
hanging or deleting configuration information corresponding to a candidate cell group in a deactivated state;
stopping signal transmission of a candidate cell group in a deactivated state;
stopping signal reception of a candidate cell group in a deactivated state;
clearing a cache of a hybrid automatic repeat quest (HARQ) process corresponding to a candidate cell group in a deactivated state;
clearing a pre-configured resource corresponding to a candidate cell group in a deactivated state; or
setting an SCell corresponding to a candidate cell group in a deactivated state to be in the deactivated state or a sleep state.

Alternatively, the method also includes
in case that a type of the target candidate cell group activated is a PCell, a switching process being triggered;
in case that a type of the target candidate cell group activated is a PSCell and a corresponding PSCell or activated PSCell does not present for the terminal currently, a PSCell adding process or an SCG adding process being triggered; or
in case that a type of the target candidate cell group activated is the PSCell and a corresponding PSCell or an activated PSCell currently presents for the terminal, a PSCell change process or an SCG change process being triggered.

Alternatively, the method also includes at least one of:
hanging or deleting configuration information corresponding to a candidate cell in a deactivated state;
stopping signal transmission of a candidate cell in a deactivated state;
stopping signal reception of a candidate cell in a deactivated state;
clearing a cache of an HARQ process corresponding to a candidate cell in a deactivated state;
clearing a pre-configured resource corresponding to a candidate cell in a deactivated state;
hanging or deleting configuration information of a candidate cell group corresponding to a candidate cell in a deactivated state;
stopping signal transmission of a candidate cell group corresponding to a candidate cell in a deactivated state;
stopping signal reception of a candidate cell group corresponding to a candidate cell in a deactivated state;
clearing a cache of an HARQ process of a candidate cell group corresponding to a candidate cell in a deactivated state;
clearing a pre-configured resource of a candidate cell group corresponding to a candidate cell in a deactivated state; or
setting an SCell in a candidate cell group corresponding to a candidate cell in a deactivated state to the deactivated state or a sleep state.

Alternatively, the activation state includes: an activated state, a deactivated state or a sleep state.

Alternatively, the type of the candidate cell includes at least one of:
a PCell;
a PSCell;
a special cell (SpCell);
an SCell;
a MCG SCell; or
a SCG SCell.

Alternatively, the type of the candidate cell group includes at least one of:
an MCG; or
an SCG.

In a second aspect, another embodiment of the disclosure provides a method for configuring a cell state. The method includes:
transmitting configuration information to a terminal, to configure a candidate cell or a candidate cell group; and
transmitting indication information to the terminal, to indicate an activation state and/or a type of the candidate cell, or an activation state and/or a type of the candidate cell group.

By implementing embodiments of the disclosure, the candidate cells or the candidate cell groups may be determined based on the configuration information and the candidate cell or the candidate cell group may be determined based on the indication information. In this way, a flexibility of the configuration for the cell or the cell group may be improved.

Alternatively, the configuration information includes a candidate cell identification or a candidate cell group identification. Generating the candidate cell identification or the candidate cell group identification includes:
generating a list of the candidate cell, and determining the candidate cell identification by numbering the candidate cell in the list of the candidate cell; and
generating a list of the candidate cell group, and determining the candidate cell group identification by numbering the candidate cell group in the list of the candidate cell.

Alternatively, the indication information includes first format indication information, in which the first format indication information includes:
candidate cell group identification indication information; or
candidate cell group bit-pattern indication information.

Alternatively, the indication information includes second format indication information, in which the second format indication information includes:
candidate cell identification indication information; or
candidate cell bit-pattern indication information.

Alternatively, the activation state includes: an activated state, a deactivated state, or a sleep state.

Alternatively, the type of the candidate cell includes at least one of:
a PCell;
a PSCell;
an SpCell;
an SCell;
an MCG SCell; or
an SCG SCell.

Alternatively, the type of the candidate cell group includes at least one of:
a MCG; or
a SCG.

In a third aspect, an embodiment of the disclosure provides a communication device. The communication device has an ability to implement part or all of the functions of the terminal in the method described in the first aspect. For example, the communication device may have functions of some or all of the embodiments of the disclosure, or may have a function of independently implementing any embodiment of the disclosure. The functions may be realized by hardware, or by the hardware executing corresponding software. The hardware or software includes one or more units or modules corresponding to the above functions.

In an implementation, a structure of the communication device may include a receiving and transmitting module and a processing module. The processing module is configured to support the communication device to perform the corresponding functions of the method described above. The receiving and transmitting module is configured to support communication between the communication device and other devices. The communication device may also include a storage module. The storage module is configured to couple with the receiving and transmitting module and the processing module, and store necessary computer programs and data of the communication device.

As an example, the processing module may be a processor, the receiving and transmitting module may be a transceiver or a communication interface, and the storage module may be a memory. In an implementation, the communication device includes:
a first receiving and transmitting module, configured to receive configuration information from a network device, and determine candidate cells or candidate cell groups based on the configuration information; and
a second receiving and transmitting module, configured to receive indication information from the network device, and determine an activation state and/or a type of the candidate cell or an activation state and/or a type of the candidate cell group based on the indication information.

In a fourth aspect, another embodiment of the disclosure provides a communication device. The communication device has an ability to implement part or all of the functions of the network device in the method described in the second aspect. For example, the communication device may have functions of some or all of embodiments of the disclosure, or may have a function of independently implementing any embodiment of the disclosure. The functions may be implemented by hardware, or by the hardware executing corresponding software. The hardware or software includes one or more units or modules corresponding to the above functions.

In an implementation, a structure of the communication device may include a receiving and transmitting module and a processing module. The processing module is configured to support the communication device to perform the corresponding functions of the method described above. The receiving and transmitting module is configured to support communication between the communication device and other devices. The communication device may also include a storage module. The storage module is configured to couple with the receiving and transmitting module and the processing module, and store necessary computer programs and data of the communication device.

As an example, the processing module may be a processor, the receiving and transmitting module may be a transceiver or a communication interface, and the storage module may be a memory. In an implementation, the communication device includes:
a third receiving and transmitting module, configured to transmit configuration information to a terminal, to configuring a candidate cell or a candidate cell group; and
a fourth receiving and transmitting module, configured to transmit indication information to the terminal, to indicate an activation state and/or a type of the candidate cell or an activation state and/or a type of the candidate cell group.

In a fifth aspect, an embodiment of the disclosure provides a communication device. The communication device includes a processor. When the processor is configured to call a computer program stored in a memory, the method described in the first aspect above is executed.

In a sixth aspect, an embodiment of the disclosure provides a communication device. The communication device includes: a processor. When the processor is configured to call a computer program stored in a memory, the method described in the second aspect above is executed.

In a seventh aspect, an embodiment of the disclosure provides a communication device. The communication device includes: a processor and a memory. A computer program is stored in the memory. The processor is configured to execute the computer program stored in the memory to cause the communication device to perform the method described in the first aspect above.

In an eighth aspect, an embodiment of the disclosure provides a communication device. The communication device includes: a processor and a memory. A computer program is stored in the memory. The processor is configured to execute the computer program to cause the communication device to perform the method described in the second aspect above.

In a ninth aspect, an embodiment of the disclosure provides a communication device. The communication device includes: a processor and an interface circuit. The interface circuit is configured to receive code instructions and transmit the code instructions to the processor. The processor is configured to run the code instructions to cause the communication device to perform the method described in the first aspect above.

In a tenth aspect, an embodiment of the disclosure provides a communication device. The communication device includes: a processor and an interface circuit. The interface circuit is configured to receive code instructions and transmit the code instructions to the processor. The processor is configured to run the code instructions to cause the communication device to perform the method described in the second aspect above.

In an eleventh aspect, an embodiment of the disclosure provides a system for configuring a cell state. The system includes: the communication device in the third aspect and the communication device in the fourth aspect; or the system includes the communication device in the fifth aspect and the communication device in the sixth aspect; or the system includes the communication device in the seventh aspect and the communication device in the eighth aspect; or the system includes the communication device in the ninth aspect and the communication device in the tenth aspect.

In a twelfth aspect, an embodiment of the disclosure provides a computer-readable storage medium, configured to store instructions employed by the terminal. The instructions, when being executed, cause the terminal to perform the method in the first aspect.

In a thirteenth aspect, an embodiment of the disclosure provides a computer-readable storage medium, configured to store instructions employed by the network device. The instructions, when being executed, cause the network device to perform the method in the second aspect.

In a fourteenth aspect, the disclosure also provides a computer program product including a computer program, which, when executed on a computer, causes the computer to perform the method in the first aspect.

In a fifteenth aspect, the disclosure also provides a computer program product including a computer program, which, when executed on a computer, causes the computer to perform the method in the second aspect.

In a sixteenth aspect, the disclosure provides a chip system. The chip system includes at least one processor and an interface for supporting the terminal to realize the functions involved in the first aspect, for example, determining or processing at least one of data and information involved in the method described above. In a possible design, the chip system also includes a memory. The memory is configured to store a computer program and data necessary for the terminal. The chip system may be combined by a chip, or may include a chip and other discrete devices.

In a seventeenth aspect, the disclosure provides a chip system. The chip system includes at least one processor and an interface, for supporting the network device to realize the functions involved in the second aspect, for example, determining or processing at least one of data and information involved in the method described above. In a possible design, the chip system also includes a memory. The memory is configured to store a computer program and data necessary for the terminal. The chip system may be combined by a chip or may include a chip and other discrete devices.

In an eighteenth aspect, the disclosure provides a computer program which, when executed on a computer, causes the computer to perform the method in the first aspect.

In a nineteenth aspect, the disclosure provides a computer program which, when executed on a computer, causes the computer to perform the method in the second aspect.

### BRIEF DESCRIPTION OF THE DRAWINGS

In order to clearly illustrate a technical solution of embodiments of the disclosure or the related art, description is made below to accompanying drawings used in the embodiments of the disclosure or the related art.
FIG. 1 is a schematic diagram illustrating a communication system according to an embodiment of the disclosure.
FIG. 2 is a flow chart illustrating a method for configuring a cell state according to an embodiment of the disclosure.
FIG. 3 is a flow chart illustrating a method for configuring a cell state according to an embodiment of the disclosure.
FIG. 4 is a block diagram illustrating a communication device according to an embodiment of the disclosure.
FIG. 5 is a block diagram illustrating a communication device according to another embodiment of the disclosure.
FIG. 6 is a block diagram illustrating a chip according to an embodiment of the disclosure.

### DETAILED DESCRIPTION

For ease of understanding, terminologies involved in the disclosure are first introduced.

### 1. Downlink control information (DCI).

The DCI is carried by a physical downlink control channel (PDCCH). The DCI may include uplink and downlink resource allocation, hybrid automatic repeat request (HARQ) information, power control, and the like. The PDCCH is a physical channel for carrying downlink scheduling information.

### 3. Medium access control (MAC) control element (CE)

The MAC CE is a path for exchanging control information between a terminal and a network. That is, the MAC CE is configured to exchange control information of an MAC layer.

In order to better understand a method for configuring a cell state according to embodiments of the disclosure, firstly, description is made below to a communication system to which embodiments of the disclosure are applicable.

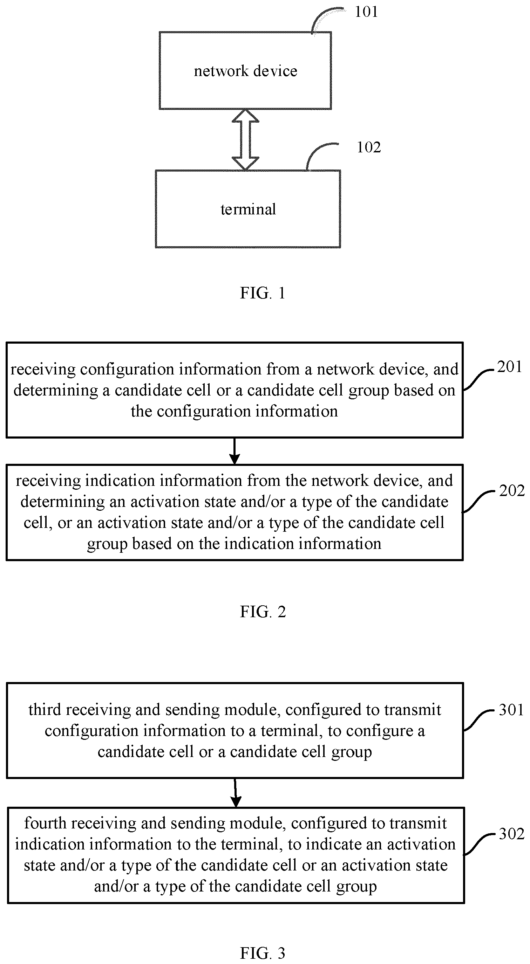

Referring to FIG. 1, FIG. 1 is a schematic diagram illustrating a communication system according to an embodiment of the disclosure. The communication system may include, but is not limited to, a network device and a terminal. The number and form of devices illustrated in FIG. 1 are only for examples and do not constitute a limitation on embodiments of the disclosure, and two or more network devices and two or more terminals may be included in a practical application. The communication system illustrated in FIG. 1 takes an example of including a network device 101 and a terminal 102.

It should be noted that a technical solution of embodiments of the disclosure may be applied to various communication systems, such as a long term evolution (LTE) system, a fifth generation (5G) mobile communication system, a 5G new radio (NR) system, or other future new mobile communication systems. It should also be noted that the side link in embodiments of the disclosure may also be referred to as a sidelink or a direct link.

The network device 101 in embodiments of the disclosure is an entity in a network side for transmitting or receiving signals. For example, the network device 101 may be an evolved NodeB (eNB), a transmission reception point (TRP), a next generation NodeB (gNB) in an NR system, a base station in other future mobile communication systems or an access node in a wireless fidelity (WiFi) system, etc. The detailed technology and detailed device form employed by the network device are not limited in embodiments of the disclosure. The network device in embodiments of the disclosure may be combined by a central unit (CU) and a distributed unit (DU). The CU may also be referred to as a control unit. The CU-DU structure may be configured to split a protocol layer of the network device, such as a base station, in which, part of functions of the protocol layer are centrally controlled by the CU, while part or all of remaining functions of the protocol layer are distributed in the DU. The DU is controlled by the CU.

The terminal 102 in embodiments of the disclosure is an entity in a user side for receiving or transmitting signals, such as a mobile phone. The terminal may also be referred to as a terminal, a user equipment (UE), a mobile station (MS), a mobile terminal (MT), and the like. The terminal may be an automobile with a communication function, a smart automobile, a mobile phone, a wearable device, a pad, a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, a wireless terminal in a smart home, and the like. Detailed technologies and detailed device forms employed by the terminal are not limited in embodiments of the disclosure.

In a NR system in the related art, the network device may provide a pre-configured cell or a pre-configured cell group for the terminal to activate a cell or a cell group selectively. In the related art, the pre-configured cell group is indicated by the MAC CE or the DCI. However, presently, there is a lack of a dynamic and effective means for implementing to dynamically change an activation state and/or a type of the cell, or an activation state and/or a type of the cell group in an activation and deactivation way.

The technical solution in embodiments of the disclosure does not constitute a limitation on the technical solution according to embodiments of the disclosure. Those skilled in the art understand that the technical solution according to embodiments of the disclosure is also applicable to a similar technical problem, with the evolution of system architecture and the emergence of a new business scenario.

Description is made in detail below to a method and an apparatus for configuring a cell state according to the disclosure with reference to accompanying drawings.

Referring to FIG. 2, FIG. 2 is a flow chart illustrating a method for configuring a cell state according to an embodiment of the disclosure. The method is applied to a terminal. As illustrated in FIG. 2, the method may include, but is not limited to, the following.

At block S201, configuration information is received from a network device, and a candidate cell or a candidate cell group is determined based on the configuration information.

In embodiments of the disclosure, a dual connectivity (DC) architecture is employed in the communication system. A master cell group (MCG) and a secondary cell group (SCG) are included in the DC architecture. There may be multiple cells in the MCG, where one cell which is configured to initiate an initial access is called a primary cell (PCell). The PCell is a main cell in the MCG. The PCell in the MCG and a secondary cell (SCell) in the MCG are joined together through carrier aggregation (CA). There may also be one main cell in the SCG, that is, a primary secondary cell (PSCell). The PSCell is a cell which is configured to initiate an initial access in the SCG. The PSCell in the SCG and an SCell in the SCG are also joined together through the CA. The cell is an area covered by one base station or a part of one base station in the communication system, and a terminal in the cell may reliably communicate with the base station by a wireless channel. In order to configure a cell or a cell group for communication to the terminal, the network device configures the candidate cell or the candidate cell group for the terminal by the configuration information.

In a possible implementation, the configuration information is a radio resource control (RRC) signaling.

At block 202, indication information is received from the network device, and an activation state and/or a type of the candidate cell, or an activation state and/or a type of the candidate cell group is determined based on the indication information.

In embodiments of the disclosure, in order to adapt to different application scenes, the network device indicates the activation state and/or the type of the candidate cell; or the activation state and/or the type of the candidate cell group corresponding to the terminal by the indication information. There may be multiple types of the candidate cell, and there may be multiple types of the cell group.

In a possible implementation, the indication information is an MAC CE or a DCI.

In a possible implementation, the terminal determines the type of the candidate cell or the type of the candidate cell group by a preset protocol.

In embodiments of the disclosure, the candidate cell or the candidate cell group may be determined based on the configuration information, and then the candidate cell or candidate cell group indicated by the indication information is determined. In this way, a flexibility of the configuration of the cell or the cell group may be improved.

Alternatively, determining the candidate cell or the candidate cell group based on the configuration information of the network device includes:
obtaining a list of the candidate cell, and determining a candidate cell identifications based on the list of the candidate cell; or
obtaining a list of the candidate cell group, and determining a candidate cell group identification based on the list of the candidate cell group.

In embodiments of the disclosure, the list of the candidate cell is configured by the network device for the terminal by the configuration information. A candidate cell in the list of the candidate cell is numbered by the terminal based on an order of the candidate cell in the list of the candidate cell. A numeral of the candidate cell is taken as the candidate cell identification.

The list of the candidate cell group is configured by the network device for the terminal by the configuration information. A candidate cell group is numbered by the terminal based on an order of the candidate cell group in the list of the candidate cell group. A numeral of the candidate cell group is taken as the candidate cell group identification.

Alternatively, the indication information includes first format indication information. The first format indication information includes:
candidate cell group identification indication information; or
candidate cell group bit-pattern indication information, in which a bit in the candidate cell group bit-pattern indication information corresponds to the candidate cell group identification.

In embodiments of the disclosure, the first format indication information is configured to indicate the activation state of the candidate cell group. The terminal determines a candidate cell group identification based on the candidate cell group identification indication information, and determines a target candidate cell group corresponding to the candidate cell group identification.

A position of the bit in the candidate cell group bit-pattern indication information is associated with the candidate cell group identification. The candidate cell group identification may be determined based on the candidate cell group bit-pattern indication information, and a target candidate cell group corresponding to the candidate cell group identification may be determined.

In a possible implementation, in case that the bit in candidate cell group bit-pattern indication information takes a value of 1, it is determined that the candidate cell group identification corresponding to the bit corresponds to the target candidate cell group. In case that the bit in the candidate cell group bit-pattern indication information takes a value of 0, it is determined that the candidate cell group identification corresponding to the bit does not correspond to the target candidate cell group.

Alternatively, the indication information includes second format indication information. The second format indication information includes:
candidate cell identification indication information; or
candidate cell bit-pattern indication information, in which a bit in the candidate cell bit-pattern indication information corresponds to the candidate cell identification.

In embodiments of the disclosure, the second format indication information is configured to indicate the activation state of the candidate cell group. The terminal determines a candidate cell identification based on the candidate cell bit-pattern indication information, and determines a target candidate cell corresponding to the candidate cell identification.

A position of the bit in the candidate cell bit-pattern indication information is associated with the candidate cell identification. The candidate cell identification may be determined based on the candidate cell bit-pattern indication information, and a target candidate cell corresponding to the candidate cell identification may be determined.

In a possible implementation, in case that the bit in the candidate cell bit-pattern indication information takes a value of 1, it is determined that the candidate cell identification corresponding to the bit corresponds to the target candidate cell. In case that the bit in the candidate cell bit-pattern indication information takes a value of 0, it is determined that the candidate cell identification corresponding to the bit does not correspond to the target candidate cell.

Alternatively, determining the activation state of the candidate cell or the activation state of the candidate cell group includes:
activating a target candidate cell group corresponding to the candidate cell group identification indication information, and determining a type of the target candidate cell group as an MCG or an SCG; or
activating a target candidate cell group corresponding to the candidate cell group bit-pattern indication information, and determining a type of the target candidate cell group as an MCG or an SCG.

In embodiments of the disclosure, the target candidate cell group taken as the MCG or the SCG is activated by the terminal.

Alternatively, determining the activation state and/or the type of the candidate cell or the activation state and/or the type of the candidate cell group based on the indication information also includes:
activating a target candidate cell corresponding to the o candidate cell identification indication information, and determining a type of the candidate cell as a PCell or a PSCell; or
activating a target candidate cell corresponding to the candidate cell bit-pattern indication information, and determining a type of the candidate cell as a PCell or a PSCell.

In embodiments of the disclosure, the target candidate cell taken as the PCell or the PSCell is activated by the terminal.

Alternatively, determining the type of the candidate cell or the type of the candidate cell group includes:
in case that the configuration information includes a type suitable for the candidate cell or the candidate cell group, determining a type of the target candidate cell or a type of the target candidate cell group based on the configuration information.

In embodiments of the disclosure, the type suitable for the candidate cell or the candidate cell group is agreed through the network device by a network configuration or a protocol. In case that the target candidate cell or the target candidate cell group is activated through the network device by the indication information, the type of the target candidate cell or the type of the target candidate cell group is determined by the terminal based on the type suitable.

In case that the configuration information includes a type of a candidate cell activated or a type of a candidate cell group activated, the type of the target candidate cell or the type of the target candidate cell group is determined based on the configuration information.

In embodiments of the disclosure, the type of the candidate cell activated or the type of the candidate cell group activated is agreed through the network device by the network configuration or the protocol. In case that the target candidate cell or the target candidate cell group is activated through the network device by the indication information, the type of the target candidate cell is determined based on the type of the candidate cell activated, or, the type of the target candidate cell group is determined based on the type of the candidate cell group activated.

Alternatively, the method also includes the following.

In case that the indication information is received through the MCG, the target candidate cell group taken as the MCG is activated according to the indication information, or, the target candidate cell taken as the PCell is activated according to the indication information.

In embodiments of the disclosure, in case that the terminal receives the indication information through the MCG, the indication information is not needed to additionally indicate the activation state of the target candidate cell group when taken as the MCG or the activation state of the target candidate cell when taken as the PCell. The target candidate cell group taken as the MCG may be activated directly, or, the target candidate cell taken as the PCell may be activated based on the indication information.

In case that the indication information is received through the PCell, the target candidate cell taken as the PCell is activated according to the indication information; or, the target candidate cell group taken as the MCG is activated according to the indication information.

In embodiments of the disclosure, in case that the terminal receives the indication information through the PCell, the indication information is not needed to additionally indicate the activation state of the target candidate cell group when taken as the MCG or the activation state of the target candidate cell when taken as the PCell. The target candidate cell group taken as the MCG may be activated directly, or, the target candidate cell taken as the PCell may be activated based on the indication information.

Alternatively, the method also includes: the following.

In case that the indication information is received through the SCG, the target candidate cell group taken as the SCG is activated according to the indication information, or, the target candidate cell taken as the PSCell is activated according to the indication information.

In embodiments of the disclosure, in case that the terminal receives the indication information through the SCG, the indication information is not needed to additionally indicate the activation state of the target candidate cell group when taken as the SCG or the activation state of the target candidate cell when taken as the PSCell. The target candidate cell group taken as the SCG may be activated directly, or, the target candidate cell taken as the PSCell may be activated based on the indication information.

In case that the indication information is received through the PSCell, the target candidate cell taken as the PSCell is activated according to the indication information, or, the target candidate cell group taken as the SCG is activated according to the indication information.

In embodiments of the disclosure, in case that the terminal receives the indication information through the PSCell, the indication information is not needed to additionally indicate the activation state of the target candidate cell group when taken as the SCG or the activation state of the target candidate cell when taken as the PSCell. The target candidate cell group taken as the SCG may be activated directly, or, the target candidate cell taken as the PSCell may be activated based on the indication information.

Alternatively, the number of an activated target candidate cell group taken as the MCG is 1, the number of an activated target candidate cell group taken as the SCG is 1, the number of an activated target candidate cell taken as the PCell is 1, and the number of an activated target candidate cell taken as the PSCell is 1.

Alternatively, the method also includes:
in case that a type of the target candidate cell group activated is the MCG, setting an activated state of a candidate cell group with a current type being the MCG to a deactivated state;
in case that a type of the target candidate cell group activated is the MCG, setting an activated state of a candidate cell group with a current type being the SCG to a deactivated state;
in case that a type of the target candidate cell group activated is an SCG, setting an activated state of a candidate cell group with a current type being the SCG to a deactivated state;
in case that a type of the target candidate cell activated is a PCell, setting an activated state of a candidate cell group with a current type being the MCG to a deactivated state;
in case that a type of the target candidate cell activated is the PCell, setting an activated state of a candidate cell group with a current type being a PSCell to a deactivated state; or
in case that a type of the target candidate cell group activated is the PSCell, setting an activated state of a candidate cell group with a current type being the SCG to a deactivated state.

Alternatively, the method also includes:
setting a SCell corresponding to the candidate cell group in the deactivated state to be in the deactivated state or a sleep state

Alternatively, the method also includes at least one of:
applying a configuration of the candidate cell group activated;
applying a configuration of the target candidate cell activated; or
applying a configuration of a candidate cell group corresponding to the target candidate cell activated.

Alternatively, the method also includes any one of:
setting an SCell corresponding to the target candidate cell group activated to be in a deactivated state or a sleep state;
setting an activation state of an SCell in the target candidate cell group activated based on the configuration information;
setting an SCell in the candidate cell group corresponding to the target candidate cell activated to be in a deactivated state or a sleep state; or
setting an activation state of an SCell in the candidate cell group corresponding to the target candidate cell activated according to the configuration information.

In embodiments of the disclosure, the activation state of the SCell may be configured by the network device to be in the deactivated state or the sleep state.

In a possible implementation, the activation state of the SCell in the target candidate cell group as the SCG being activated may be configured by the network device to be in an activated state, a deactivated state or a sleep state through an RRC message.

Alternatively, the method also includes:
initiating a random access process to the target candidate cell activated or the target candidate cell group activated.

In embodiments of the disclosure, the random access process, which is a basic and important process in the communication system, is configured to establish uplink synchronization, to establish a cell-radio network temporary identifier (C-RNTI) and to request the network device to allocate an uplink resource to the terminal. The random access process is not only configured for an initial access, but also configured for a new cell access in a switching process, an access after a radio link fails, and a resumption of the uplink synchronization in case of an uplink/downlink data is transmitted, and the like.

Alternatively, the method also includes:
in case that a type of the target candidate cell group activated is the MCG, a switching process being triggered;
in case that a type of the target candidate cell group activated is an SCG and a corresponding SCG or activated SCG does not present for the terminal currently, an SCG adding process being triggered; or
in case that a type of the target candidate cell group activated is an SCG and a corresponding SCG or an activated SCG currently presents for the terminal, an SCG change process being triggered.

In embodiments of the disclosure, in case that the type of the activated target candidate cell group is the SCG and a corresponding SCG or the activated SCG does not present for the terminal currently, the SCG adding process is triggered to add the target candidate cell group activated. In case that the type of the activated target candidate cell group is the SCG and a corresponding SCG or the activated SCG currently presents for the terminal, the SCG change process is triggered to change the activated SCG corresponding to the terminal.

Alternatively, the method also includes at least one of:
hanging or deleting configuration information corresponding to a candidate cell group in a deactivated state;
stopping signal transmission of a candidate cell group in a deactivated state;
stopping signal reception of a candidate cell group in a deactivated state;
clearing a cache of a hybrid automatic repeat quest (HARQ) process corresponding to a candidate cell group in a deactivated state;
clearing a pre-configured resource corresponding to a candidate cell group in a deactivated state; or
setting an SCell corresponding to a candidate cell group in a deactivated state to be in the deactivated state or a sleep state.

Alternatively, the method also includes:
in case that a type of the target candidate cell group activated is a PCell, a switching process being triggered;
in case that a type of the target candidate cell group activated is the PSCell and a corresponding PSCell or activated PSCell does not present for the terminal currently, a PSCell adding process or an SCG adding process being triggered; or
in case that a type of the target candidate cell group activated is the PSCell and a corresponding PSCell or an activated PSCell currently presents for the terminal, a PSCell change process or an SCG change process being triggered.

In an embodiment of the disclosure, in case that the type of the target candidate cell group activated is the PSCell and a corresponding PSCell or activated PSCell does not present for the terminal currently, the PSCell adding process or the SCG adding process is triggered to add the target candidate cell group activated or a candidate cell group corresponding to the target candidate cell group. In case that the type of the target candidate cell group activated is the PSCell and the corresponding PSCell or the activated PSCell currently presents for the terminal, the PSCell change process or the SCG change process is triggered to change the activated SCG or the activated PSCell corresponding to the terminal.

Alternatively, the method also includes at least one of:
hanging or deleting configuration information corresponding to a candidate cell in a deactivated state;
stopping signal transmission of a candidate cell in a deactivated state;
stopping signal reception of a candidate cell in a deactivated state;
clearing a cache of an HARQ process corresponding to a candidate cell in a deactivated state;
clearing a pre-configured resource corresponding to a candidate cell in a deactivated state;
hanging or deleting configuration information of a candidate cell group corresponding to a candidate cell in a deactivated state;
stopping signal transmission of a candidate cell group corresponding to a candidate cell in a deactivated state;
stopping signal reception of a candidate cell group corresponding to a candidate cell in a deactivated state;
clearing a cache of an HARQ process of a candidate cell group corresponding to a candidate cell in a deactivated state;
clearing a pre-configured resource of a candidate cell group corresponding to a candidate cell in a deactivated state; or
setting an SCell in a candidate cell group corresponding to a candidate cell in a deactivated state to the deactivated state or a sleep state.

Alternatively, the activation state includes: an activated state, a deactivated state or a sleep state.

Alternatively, the type of the candidate cell includes at least one of:
a PCell;
a PSCell;
a special cell (SpCell);
a SCell;
a MCG SCell; or
a SCG SCell.

In embodiments of the disclosure,
alternatively, the type of the candidate cell group includes at least one of:
a MCG; or
a SCG.

By implementing embodiments of the disclosure, the candidate cell or the candidate cell group may be determined based on the configuration information, and then the candidate cell or the candidate cell group is determined based on the indication information. In this way, a flexibility of the configuration of the cell or the cell group may be improved.

Referring to FIG. 3, FIG. 3 is a flow chart illustrating a method for configuring a cell state according to an embodiment of the disclosure. The method is performed by a network device. As illustrated in FIG. 3, the method may include, but is not limited to, the following step.

At block 301, configuration information is sent to a terminal, to configure a candidate cell or a candidate cell group.

In embodiments of the disclosure, a DC architecture is employed in the communication system. An MCG and an SCG is included in the DC architecture. There may be multiple cells in the MCG, where one cell which is configured to initiate an initial access is called a PCell. The PCell is a main cell in the MCG. The PCell in the MCG and an SCell in the MCG are joined together through CA. There may also be one main cell in the SCG, that is, a PSCell. The PSCell is a cell which is configured to initiate an initial access in the SCG. The PSCell in the SCG and an SCell in the SCG are also joined together through the CA. The cell is an area covered by one base station or a part of one base station in the communication system, and a terminal in the cell may reliably communicate with the base station by a wireless channel. In order to configure a cell or a cell group for communication to the terminal, the network device configures the candidate cell or the candidate cell group for the terminal by the configuration information.

In a possible implementation, the configuration information is an RRC signaling.

At block 302, indication information is sent to the terminal, to indicate an activation state and/or a type of the candidate cell, or an activation state and/or a type of the candidate cell group.

In embodiments of the disclosure, in order to adapt to different application scenes, the network device indicates the activation state and/or the type of the candidate cell or the activation state and/or the type of the candidate cell group corresponding to the terminal by the indication information. There may be multiple types of the candidate cell, and there may be multiple types of types of the cell group.

In a possible implementation, the indication information is an MAC CE or a DCI.

Alternatively, the configuration information includes a candidate cell identification or a candidate cell group identification. Generating the candidate cell identification or the candidate cell group identification includes:
generating a list of the candidate cell, and determining the candidate cell identification by numbering the candidate cell in the list of the candidate cell.

In embodiments of the disclosure, the list of the candidate cell is configured by the network device for the terminal by the configuration information. A candidate cell in the list of the candidate cell is numbered by the terminal based on an order of the candidate cell in the list of the candidate cell. A numeral of the candidate cell is used as the candidate cell identification.

The method also includes: generating a list of the candidate cell group, and determining the candidate cell group identification by numbering a candidate cell group in the list of the candidate cell.

In an embodiment of the disclosure, the list of the candidate cell group is configured by the network device for the terminal by the configuration information. A candidate cell group in the list of the candidate cell group is numbered by the terminal based on an order of the candidate cell group in the list of the candidate cell group. A numeral of the candidate cell group is used as the candidate cell group identification.

Alternatively, the indication information includes first format indication information. The first format indication information in includes:
candidate cell group identification indication information; or
candidate cell group bit-pattern indication information.

Alternatively, the indication information includes second format indication information. The second format indication information includes:
candidate cell identification indication information; or
candidate cell bi-pattern indication information.

Alternatively, the activation state includes: an activated state, a deactivation state or a sleep state.

Alternatively, the type of the candidate cell includes at least one of:
a PCell;
a PSCell;
an SpCell;
an SCell;
an MCG SCell; or
an SCG SCell.

Alternatively, the type of the candidate cell group includes at least one of:
an MCG; or
an SCG.

In the above embodiments according to the disclosure, description is made to the method according to embodiments of the disclosure from the perspectives of the network device and the terminal respectively. In order to realize each of the functions in the method according to the above embodiments of the disclosure, the network device and the terminal may include a hardware structure, a software module, and realize each of the above functions in the form of the hardware structure, the software module, or a combination of the hardware structure and the software module. A certain function of the above functions may be executed in the form of the hardware structure, the software module, or the combination of the hardware structure and the software module.

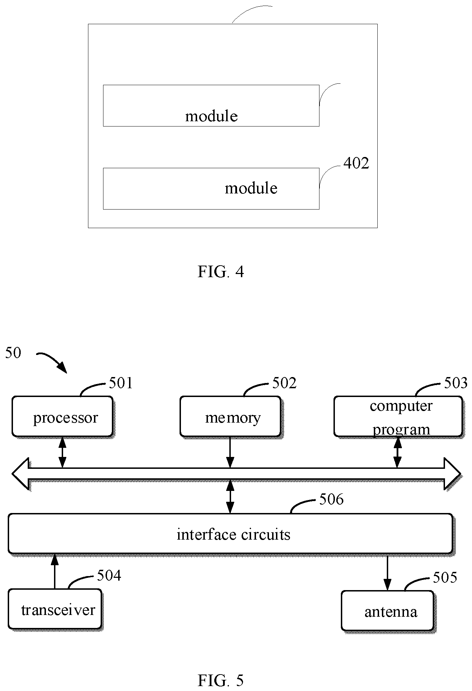

Referring to FIG. 4, FIG. 4 is a block diagram illustrating a communication device 40 according to an embodiment of the disclosure. The apparatus 40 illustrated in FIG. 4 may include a receiving and transmitting module 401 and a processing module 402. The receiving and transmitting module 401 may include a transmitting unit and/or a receiving unit. The transmitting unit is configured to implement a transmitting function, and the receiving unit is configured to implement a receiving function. The receiving and transmitting module 401 may implement the transmitting function and/or the receiving function.

The apparatus 40 may be a terminal (such as the terminal provided in the above-described methods), an apparatus in the terminal, or an apparatus that may be used in matching to the terminal. Alternatively, the apparatus 40 may be a network device, an apparatus in the network device, or an apparatus that may be used in matching to the network device.

The apparatus 40 may be the terminal. The apparatus includes:
a first receiving and transmitting module, configured to receive configuration information from a network device, and to determine a candidate cell or a candidate cell group based on the configuration information; and
a second receiving and transmitting module, configured to receive indication information from the network device, and to determine an activation state and/or a type of the candidate cell, or an activation state and/or a type of the candidate cell group based on the indication information.

The apparatus 40 may be the network device. The apparatus includes:
a third receiving and transmitting module, configured to transmit configuration information to a terminal, to configure a candidate cell or a candidate cell group; and
a fourth receiving and transmitting module, configured to transmit indication information to the terminal, to indicate an activation state and/or a type of the candidate cell, or an activation state and/or a type of the candidate cell group.

Referring to FIG. 5, FIG. 5 is a schematic diagram illustrating a communication device 50 according to an embodiment of the disclosure. The communication device 50 may be a network device, a terminal (such as the terminal provided in above-described methods), or a chip, a chip system or a processor that supports the network device to realize the above-described methods, or a chip, a chip system or a processor that supports the terminal to realize the above-described methods. The device may be configured to realize the methods described in the above method embodiments, and for details, please refer to the descriptions of the above-described method embodiments.

The communication device 50 may include one or more processors 501. The processor 501 may be a general purpose processor or a dedicated processor, such as, a baseband processor or a central processor. The baseband processor is configured to process a communication protocol and communication data. The central processor is configured to control the communication device (e.g., a base station, a baseband chip, a terminal, a terminal chip, a central unit (CU) or a distributed unit (DU)), to executing a computer program, and to process data of the computer program.

Alternatively, the communication device 50 may include one or more memories 502 on which a computer program 503 may be stored. The processor 501 executes the computer program 503 to cause the communication device 50 to perform the methods described in the above method embodiments. Alternatively, data may also be stored in the memory 502. The communication device 50 and the memory 502 may be provided separately or may be integrated together.

Alternatively, the communication device 50 may also include a transceiver 504 and an antenna 505. The transceiver 504 may be referred to as a transceiver unit, a transceiver machine, or a transceiver circuit, for realizing a receiving and transmitting function. The transceiver 504 may include a receiver and a transmitter. The receiver may be referred to as a receiver machine or a receiving circuit, for realizing a receiving function. The transmitter may be referred to as a transmitter machine or transmitting circuit, for realizing the transmitting function.

Alternatively, the communication device 50 may also include one or more interface circuits 506. The interface circuits 506 are configured to receive code instructions and transmit the code instructions to the processor 501. The processor 501 runs the code instructions to cause the communication device 50 to perform the method described in the method embodiments.

The communication device 50 is a terminal (such as the terminal provided in above-described methods). The processor 501 is configured to perform the actions at block 201 or block 202 in FIG. 2.

The communication device 50 is a network device. The transceiver 504 is configured to perform the actions at block 301 or block 302 in FIG. 3.

In an implementation, the processor 501 may include a transceiver for implementing the receiving and transmitting function. For example, the transceiver may be a transceiver circuit, an interface, or an interface circuit. The transceiver circuit, interface, or interface circuitry for implementing the receiving and transmitting function may be separated, or may be integrated together. The transceiver circuit, interface, or interface circuit described above may be configured for code/data reading and writing, or may be configured for signal transmitting or delivery.

In an implementation, the processor 501 may store the computer program 503. The processor 501 executes the computer program 503 to cause the communication device 50 to perform the methods described in the above method embodiments. The computer program 503 may be solidified in the processor 501, in which case the processor 501 may be implemented by hardware.

In an implementation, the communication device 50 may include circuits. The circuits may implement the transmitting, receiving or communicating function in the above method embodiments. The processor and the transceiver described in the disclosure may be implemented on an integrated circuit (IC), an analog IC, a radio frequency integrated circuit (RFIC), a mixed signal IC, an application specific integrated circuit (ASIC), a printed circuit board (PCB), and an electronic device. The processor and transceiver may also be produced using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be the network device or the terminal (such as the terminal in the above method embodiments), but a scope of the communication device described in the disclosure is not limited thereto, and a structure of the communication device may not be limited by FIG. 5. The communication device may be a stand-alone device or may be part of a larger device. For example the communication device may be:
(1) a stand-alone IC, a chip, a chip system or a subsystem;
(2) a collection of ICs including one or more ICs, where alternatively, the collection of ICs may also include storage components for storing data and a computer program;
(3) an ASIC, such as a modem;
(4) a module that may be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

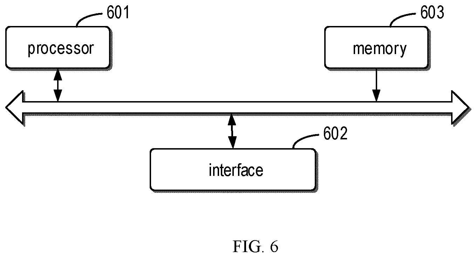

For the case where the communication device may be the chip or the chip system, please refer to the block diagram of the chip illustrated in FIG. 6. The chip illustrated in FIG. 6 includes a processor 601 and an interface 602. There may be one or more processors 601, and there may be multiple interfaces 602.

Alternatively, the chip also includes a memory 603 configured to store necessary computer programs and data.

It is understood by those skilled in the art that various illustrative logical blocks and steps listed in embodiments of the disclosure may be implemented by electronic hardware, computer software, or a combination of both. Whether such function is implemented by hardware or software depends on a particular application and a design requirement of an entire system. Those skilled in the art may use various methods to implement the described function for each particular application, but such implementation should not be construed as being beyond the scope of protection of embodiments of the disclosure.

Embodiments of the disclosure also provide a system for configuring a cell state. The system includes a communication device as a terminal (such as the terminal provided in above-described methods) and a communication device as a network device in the embodiment illustrated FIG. 4; or, the system includes a communication device as a terminal (such as the terminal provided in above-described methods) and a communication device as a network device in the embodiment illustrated in FIG. 5.

The disclosure also provides a readable storage medium for storing instructions. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination of both. When implemented using software, the above embodiments may be implemented, in whole or in part, in the form of the computer program product. The computer program product includes one or more computer programs. When the computer program is loaded and executed on the computer, all or part of processes or functions described in embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or in a wireless manner (e.g., by using infrared wave, wireless wave, or microwave). The computer-readable storage medium may be any usable medium to which the computer has access to or a data storage device such as a server and a data center integrated by one or more usable mediums. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understands that the first, second, and other various numerical numbers involved in the disclosure are only described for the convenience of differentiation, and are not used to limit the scope of the embodiments of the disclosure, but to indicate the order of precedence.

The term "at least one" in the disclosure may also be described as one or more, and the term "multiple" may be two, three, four, or more, which is not limited in the disclosure. In embodiments of the disclosure, for technical features, the terms "first", "second", and "third"; and "A", "B", "C" and "D" and the like are used to distinguish different technical features, the technical features described using the terms "first", "second", and "third"; and "A", "B", "C" and "D"; and the like do not indicate any order of precedence or magnitude.

The correspondences illustrated in the tables in the disclosure may be configured or may be predefined. The values of information in the tables are merely examples and may be configured to other values, which are not limited in the disclosure. In configuring the correspondence between the information and the parameters, there does not require that all the correspondences illustrated in the tables must be configured. For example, the above tables may be adjusted appropriately, such as splitting, merging, and the like. The names of the parameters illustrated in the headings of the above tables may be other names that are understood by the communication device, and the values or representations of the parameters may be other values or expressions that are understood by the communication device. Each of the above tables may also be implemented with other data structures, such as, arrays, queues, containers, stacks, linear tables, pointers, chained lists, trees, graphs, structures, classes, heaps, and hash tables.

The term "pre-definition" in the application may be understood as definition, pre-definition, storage, pre-storage, pre-negotiation, pre-configuration, curing, or pre-firing.

Those skilled in the art may realize that the units and algorithmic steps of the various examples described in combination with the embodiments disclosed herein are capable of being implemented in the form of the electronic hardware, or a combination of the computer software and the electronic hardware. Whether these functions are performed in the hardware or software way depends on the particular application and design constraints of the technical solution. Those skilled in the art may use different ways to implement the described functions for each particular application, but such implementations should not be considered as beyond the scope of the disclosure.

It is clearly understood by those skilled in the field that, for the convenience and brevity of description, detailed work processes of the systems, apparatuses, and units described above may be referred to the corresponding processes in the above method embodiments, which are not be repeated here.

The above is only detailed implementations of the disclosure, but the scope of protection of the disclosure is not limited thereto. Those skilled in the art familiar to the technical field may easily think of changes or substitutions in the technical scope disclosed by the disclosure, which shall be covered by the scope of protection of the disclosure. Therefore, the scope of protection of the disclosure shall be governed by the scope of protection of the appended claims

## Claims

1. A method for configuring a cell state, performed by a terminal, comprising:
receiving configuration information from a network device, and determining a candidate cell or a candidate cell group based on the configuration information; and
receiving indication information from the network device, and determining an activation state and/or a type of the candidate cell, or an activation state and/or a type of the candidate cell group based on the indication information.

2. The method of claim 1, wherein determining the candidate cell or the candidate cell group based on the configuration information of the network device comprises:
obtaining a list of the candidate cell and determining a candidate cell identification based on the list of the candidate cell; or
obtaining a list of the candidate cell group, and determining a candidate cell group identification based on the list of the candidate cell group.

3. The method of claim 1 or 2, wherein the indication information comprises first format indication information, wherein the first format indication information comprises:
candidate cell group identification indication information; or
candidate cell group bit-pattern indication information, wherein a bit in the candidate cell group bit-pattern indication information corresponds to the candidate cell group identification.

4. The method of claim 1 or 2, wherein the indication information comprises second format indication information, wherein the second format indication information comprises:
candidate cell identification indication information; or
candidate cell bit-pattern indication information, wherein a bit in the candidate cell bit-pattern indication information corresponds to the candidate cell identification.

5. The method of claim 3, wherein determining the activation state of the candidate cell or the activation state of the candidate cell group comprises:
activating a target candidate cell group corresponding to the candidate cell group identification indication information , and determining a type of the target candidate cell group as a master cell group (MCG) or a secondary cell group (SCG); or
activating a target candidate cell group corresponding to the candidate cell group bit-pattern indication information, and determining a type of the target candidate cell group as an MCG or an SCG.

6. The method of claim 4, wherein determining the activation state and/or the type of the candidate cell, or the activation state and/or the type of the candidate cell group based on the indication information further comprises:
activating a target candidate cell corresponding to the candidate cell identification indication information, and determining a type of the candidate cell as a primary cell (PCell) or a primary secondary cell (PSCell); or
activating a target candidate cell corresponding to the candidate cell bit-pattern indication information, and determining a type of the candidate cell as a PCell or a PSCell.

7. The method of claim 5 or 6, wherein determining the type of the candidate cell or the type of the candidate cell group comprises:
in case that the configuration information comprises a type suitable for the candidate cell or the candidate cell group, determining a type of the target candidate cell or a type of the target candidate cell group based on the configuration information; or
in case that the configuration information comprises a type of a candidate cell activated or a type of a candidate cell group activated, determining a type of the target candidate cell or a type of the target candidate cell group based on the configuration information.

8. The method of claim 5 or 6, further comprising:
in case that the indication information is received through a master cell group (MCG), activating the target candidate cell group taken as the MCG according to the indication information, or, activating the target candidate cell taken as a primary cell (PCell) according to the indication information; or
in case that the indication information is received through a PCell, activating the target candidate cell taken as the PCell according to the indication information; or, activating the target candidate cell group taken as an MCG according to the indication information.

9. The method of claim 5 or 6, further comprising:
in case that the indication information is received through a secondary cell group (SCG), activating the target candidate cell group taken as the SCG according to the indication information, or, activating the target candidate cell taken as a primary secondary cell (PSCell) according to the indication information; or
in case that the indication information is received through a PSCell, activating the target candidate cell taken as the PSCell according to the indication information, or, activating the target candidate cell group taken as an SCG according to the indication information.

10. The method of claim 8 or 9, wherein a number of an activated target candidate cell group taken as the MCG is 1, a number of an activated target candidate cell group taken as the SCG is 1, a number of an activated target candidate cell taken as the PCell is 1, and a number of an activated target candidate cell taken as the PSCell is 1.

11. The method of claim 5 or 6, further comprising:
in case that a type of the target candidate cell group activated is a master cell group (MCG), setting an activated state of a candidate cell group with a current type being the MCG to a deactivated state;
in case that a type of the target candidate cell group activated is the MCG, setting an activated state of a candidate cell group with a current type being the SCG to a deactivated state;
in case that a type of the target candidate cell group activated is a secondary cell group (SCG), setting an activated state of a candidate cell group with a current type being the SCG to a deactivated state;
in case that a type of the target candidate cell activated is a primary cell (PCell), setting an activated state of a candidate cell group with a current type being the MCG to a deactivated state;
in case that a type of the target candidate cell activated is the PCell, setting an activated state of a candidate cell group with a current type being a primary secondary cell (PSCell) to a deactivated state; or
in case that a type of the target candidate cell group activated is the PSCell, setting an activated state of a candidate cell group with a current type being the SCG to a deactivated state.

12. The method of claim 11, further comprising:
setting a secondary cell (SCell) corresponding to the candidate cell group in the deactivated state to be in the deactivated state or a sleep state.

13. The method of claim 5 or 6, further comprising at least one of:
applying a configuration of a candidate cell group activated;
applying a configuration of the target candidate cell activated; or
applying a configuration of a candidate cell group corresponding to the target candidate cell activated.

14. The method of claim 13, further comprising any one of:
setting an SCell corresponding to corresponding to the target candidate cell group activated to be in a deactivated state or a sleep state;
setting an activation state of an SCell in the target candidate cell group activated based on the configuration information;
setting an SCell in the candidate cell group corresponding to the target candidate cell activated to be in a deactivated state or a sleep state; or
setting an activation state of an SCell in the candidate cell group corresponding to the target candidate cell activated according to the configuration information.

15. The method of claim 5 or 6, further comprising:
initiating a random access process to the target candidate cell activated or the target candidate cell group activated.

16. The method of claim 5 or 6, further comprising:
in case that a type of the target candidate cell group activated is a master cell group (MCG), a switching process being triggered;
in case that a type of the target candidate cell group activated is a secondary cell group (SCG) and a corresponding SCG or activated SCG does not present for the terminal currently, an SCG adding process being triggered; or
in case that a type of the target candidate cell group activated is an SCG and a corresponding SCG or an activated SCG currently presents for the terminal, an SCG change process being triggered.

17. The method of claim 5 or 6 or 11, further comprising at least one of:
hanging or deleting configuration information corresponding to a candidate cell group in a deactivated state;
stopping signal transmission of a candidate cell group in a deactivated state;
stopping signal reception of a candidate cell group in a deactivated state;
clearing a cache of a hybrid automatic repeat quest (HARQ) process corresponding to a candidate cell group in a deactivated state;
clearing a pre-configured resource corresponding to a candidate cell group in a deactivated state; or
setting an SCell corresponding to a candidate cell group in a deactivated state to be in the deactivated state or a sleep state.

18. The method of claim 5 or 6, further comprising:
in case that a type of the target candidate cell group activated is a primary cell (PCell), a switching process being triggered;
in case that a type of the target candidate cell group activated is a primary secondary cell (PSCell) and a corresponding PSCell or activated PSCell does not present for the terminal currently, a PSCell adding process or an SCG adding process being triggered; or
in case that a type of the target candidate cell group activated is the PSCell and a corresponding PSCell or an activated PSCell currently presents for the terminal, a PSCell change process or an SCG change process being triggered.

19. The method of claim 5 or 6 or 11, further comprising at least one of:
hanging or deleting configuration information corresponding to a candidate cell in a deactivated state;
stopping signal transmission of a candidate cell in a deactivated state;
stopping signal reception of a candidate cell in a deactivated state;
clearing a cache of a hybrid automatic repeat quest (HARQ) process corresponding to a candidate cell in a deactivated state;
clearing a pre-configured resource corresponding to a candidate cell in a deactivated state;
hanging or deleting configuration information of a candidate cell group corresponding to a candidate cell in a deactivated state;
stopping signal transmission of a candidate cell group corresponding to a candidate cell in a deactivated state;
stopping signal reception of a candidate cell group corresponding to a candidate cell in a deactivated state;
clearing a cache of an HARQ process of a candidate cell group corresponding to a candidate cell in a deactivated state;
clearing a pre-configured resource of a candidate cell group corresponding to a candidate cell in a deactivated state; or
setting an SCell in a candidate cell group corresponding to a candidate cell in a deactivated state to the deactivated state or a sleep state.

20. The method of any one of claims 1-19, wherein the activation state comprises: an activated state, a deactivated state or a sleep state.

21. The method of any one of claims 1-19, wherein the type of the candidate cell comprises at least one of:
a primary cell (PCell);
a primary secondary cell (PSCell);
a special cell (SpCell);
a secondary cell (SCell);
a master cell group (MCG) secondary cell (SCell); or
a secondary cell group (SCG) secondary cell (SCell).

22. The method of any one of claims 1 to 19, wherein the type of the candidate cell group comprises at least one of:
a master cell group (MCG); or
a secondary cell group (SCG).

23. A method for configuring a cell state, performed by a network device, comprising:
transmitting configuration information to a terminal to configure a candidate cell or a candidate cell group; and
transmitting indication information to the terminal, to indicate an activation state and/or a type of the candidate cell, or an activation state and/or a type of the candidate cell group.

24. The method of claim 23, wherein the configuration information comprises a candidate cell identification or a candidate cell group identification, wherein generating the candidate cell identification or the candidate cell group identification comprises:
generating a list of the candidate cell, and determining a candidate cell identification by numbering the candidate cell in the list of the candidate cell; and
generating a list of the candidate cell group, and determining a candidate cell group identification by numbering the candidate cell group in the list of the candidate cell.

25. The method of claim 23, wherein the indication information comprises first format indication information, wherein the first format indication information comprises:
candidate cell group identification indication information; or
candidate cell group bit-pattern indication information.

26. The method of claim 23, wherein the indication information comprises second format indication information, wherein the second format indication information comprises:
candidate cell identification indication information ; or
candidate cell bit-pattern indication information.

27. The method of any one of claims 23 to 26, wherein the activation state comprises: an activated state, a deactivated state, or a sleep state.

28. The method of any one of claims 23 to 26, wherein the type of the candidate cell comprises at least one of:
a primary cell (PCell);
a primary secondary cell (PSCell);
a special cell (SpCell);
a secondary cell (SCell);
a master cell group (MCG) secondary cell (SCell); or
a secondary cell group (SCG) secondary cell (SCell).

29. The method of any one of claims 23 to 26, wherein the type of the candidate cell group comprises at least one of:
a master cell group (MCG); or
a secondary cell group (SCG).

30. An apparatus for configuring a cell state, performed by a terminal, comprising:
a first receiving and transmitting module, configured to receive configuration information from a network device, and determine a candidate cell or a candidate cell group based on the configuration information; and
a second receiving and transmitting module, configured to receive indication information from the network device, and determine an activation state and/or a type of the candidate cell, or an activation state and/or a type of the candidate cell group based on the indication information.

31. An apparatus for configuring a cell state, performed by a network device, comprising:
a third receiving and transmitting module, configured to transmit configuration information to a terminal, to configure a candidate cell or a candidate cell group; and
a fourth receiving and transmitting module, configured to transmit indication information to the terminal, to indicate an activation state and/or a type of the candidate cell, or an activation state and/or a type of the candidate cell group.

32. A communication device, comprising a processor and a memory, wherein a computer program is stored in the memory, and the processor is configured to execute the computer program stored in the memory to cause the communication device to perform the method according to any one of claims 1 to 22 or claims 23 to 29.

33. A communication device, comprising a processor and an interface circuit;
wherein the interface circuit is configured to receive code instructions and transmit the code instructions to the processor; and
the processor is configured to execute the code instructions to perform the method of any one according to any one of claims 1 to 22 or claims 23 to 29.

34. A computer-readable storage medium, configured to store instructions, wherein, when the instructions are executed, the method according to any one of claims 1 to 22 or claims 23 to 29 is performed.
